# EUROPEAN PATENT SPECIFICATION

(11) **EP 1 370 151 B1**
(45) Date of publication and mention of the grant of the patent: **30.09.2015**
(21) Application number: 02716645.3
(22) Date of filing: 25.03.2002
(51) Int. Cl.: A23G 4/00, A23G 4/04, A23G 4/06, A23G 4/08, A23G 4/12, A23G 4/20, C08G 63/08, C08G 63/64, C08G 64/02, A23G 3/34

(54) **BIODEGRADABLE CHEWING GUM AND METHOD OF MANUFACTURING SUCH CHEWING GUM**
BIOLOGISCH ABBAUBARER KAUGUMMI SOWIE VERFAHREN ZUR HERSTELLUNG EINES SOLCHEN KAUGUMMIS
CHEWING GUM BIODEGRADABLE ET SON PROCEDE DE FABRICATION

(30) Priority: 23.03.2001 DK 200100495; 23.03.2001 DK 200100492; 23.03.2001 DK 200100493; 23.03.2001 DK 200100491; 23.03.2001 DK 200100494; 06.07.2001 US 303136 P
(43) Date of publication of application: 17.12.2003
(73) Proprietor: Gumlink A/S, 7100 Vejle (DK)
(72) Inventor: WITTORFF, Helle, DK-7120 Vejle (DK); ANDERSEN, Lone, DK-5500 Middelfart (DK); STOREY, Robson, Hattiesburg, MS 39402 (US)
(74) Representative: Patentgruppen
(86) International application number: PCT/DK2002/000205
(87) International publication number: WO 2002/076231

(56) References cited:
- WO-A-00/19837
- WO-A-01/47368
- US-A- 5 567 450
- US-A- 5 672 367
- US-A- 6 153 231

## Description

### Field of the invention

The present invention relates generally to the field of chewing gum manufacturing and in particular to a method for preparing a chewing gum which comprises an at least partially degradable gum base. The method results in a chewing gum having an acceptable texture profile.

### Background of the invention

It is generally recognized that chewing gum that is dropped in indoor or outdoor environments gives rise to considerable nuisances and inconveniences due to the fact that the dropped gum sticks firmly to e.g. street and pavement surfaces and to shoes and clothes of people being present or moving in the environments. Adding substantially to such nuisances and inconveniences is the fact that currently available chewing gum products are based on the use of elastomeric and resinous polymers of natural or synthetic origin that are substantially non-degradable in the environment. Accordingly, several attempts have been made in order to develop degradable or biodegradable chewing gum.

Degradable chewing gum bases have been disclosed in US 6,153,231 which comprises poly(lactic acid) co-polymers selected from poly(lactid acid-dimer-fatty acid-oxazoline) copolymers and poly(lactic acid-diol-urethane) copolymers.

US 5,672,367 discloses degradable chewing gum made from certain synthetic polymers with chemical unstable bonds in their polymer chains which can be broken under the influence of light or hydrolytically into water-soluble and non-toxic components. The claimed degradable chewing gum comprises at least one degradable polyester polymer obtained by the polymerisation of cyclic esters, e.g. based on lactides, glycolides, trimethylene carbonate and ε-caprolactone.

However, such gum bases typically do not posses the appropriate rheological properties in order to make a chewing gum having acceptable texture properties. Accordingly, it can be difficult to provide an appropriate degradable gum base or gum base ingredient in order to form a chewing gum having good texture properties.

Several attempts to obtain a biodegradable chewing gum, which may complement or even replace traditional non-degradable chewing gum, have been made within the prior art.

A process for manufacturing of such polymers has for example been disclosed in US 5,672,367. According to US 5,672,367, the obtained polymer is prepared by melting the gum base formed by at least one polyester polymer.

However, one problem, when for example applying biodegradable substitutes in gum base and in chewing gums, is that the chewing gum texture "feels wrong" compared to conventional chewing gums, which, inevitably forms the reference to consumers of such products. Extensive experimentation has been performed in order to overcome this problem.

Basically, the biodegradable polymers available for the manufacturing of chewing gum according to the prior art tend to behave so very different from traditional gum base components. It has therefore been extremely difficult to emulate the properties of traditional chewing gums.

Therefore, great effort has been put into the process of providing suitable biodegradable chewing gum components, such as polyesters obtained by polymerization of cyclic esters.

It is an object of the invention to provide chewing gum, which may inherit properties comparable to conventional non-biodegradable chewing gum when applying the above mentioned biodegradable polymers.

The invention relates to a chewing gum comprising gum base, sweetener and flavor, wherein at least a part of said gum base comprises at least one biodegradable polymer, wherein the amount of plasticizers in the chewing gum is at least 5% w/w, wherein said plasticizers are selected from the group consisting of emulsifiers, fat, wax, flavor, solubilizers, surfactants and liquid sweeteners, said chewing gum comprises an amount of emulsifiers of less than 5% w/w and where
tan(delta) is at least 0.6 within the linear viscoelastic region (LVR) of the chewing gum and where
the tan(delta) is defined as tanδ(ω)=(loss modulus G"/storage modulus G'), wherein the tan(delta) is measured at 37°C and at an oscillation frequency of 1.0Hz, wherein tan(delta)(crit) is greater than 0.8, where the tan(delta)(crit) is the tan(delta) value corresponding to delta(crit) in a tan(delta) vs. oscillation torque measurement and where the delta (crit) represents the critical oscillation torque determined in a G' vs. oscillation torque measurement where the oscillation torque invokes a transition from the LVR to the non-LVR.

According to the invention, chewing gum may be obtained by means of several different types of biodegradable polymers as described in WO 01/47368, WO 00/19837, WO 98/17123, US patent 6,153,231, WO 00/35297, WO 98/17124, US patent 6,017,566, hereby incorporated by reference.

According to the invention, it has been recognized that the texture may be referred to measurable rheological properties of the final chewing gum.

Furthermore, it has been realized that biodegradable polymers may be adjusted towards desired rheological properties by means of so-called plasticizers, even if the chewing gum is made on the basis of biodegradable polymers, which as from the beginning do not meet desired rheological properties.

According to the invention, plasticizers in a broad sense e.g. comprise aroma and flavoring agents, liquid sweeteners, emulsifiers, solubilizers, waxes.

Specific examples may e.g. include triacetine, lecithin.

Further, it has been determined, that the plasticizers may even compensate properties of biodegradable polymers, which, as from the start of the process, seem to be inferior compared to conventional non-biodegradable chewing gum components.

According to one embodiment of the invention, properties of chewing gum, which were deemed less acceptable with respect to e.g. texture based on traditional non-degradable gum polymers, were partly compensated or even completely compensated by means of rheological tuning by means of plasticizers.

According to a further embodiment of the invention, chewing gum partly comprising degradable polymers, may also be tuned into chewing gum having commercial attractive properties.

The tan(delta) is at least 0.6 within the viscoelastic region (LVR) when measured at a temperature of the approximate in-use-temperature and measured by standard oscillation test setups at a frequency of the approximate in-use frequency, i.e. in a frequency band close to 1 Hz..

In-use temperature is typically around 34 C°, i.e. close to mouth temperature.

According to the invention, a partly or completely acceptable biodegradable chewing gum has been provided on the basis of biodegradable polymers.

According to the invention, chewing gum having acceptable texture profiles has been prepared on the basis of biodegradable gum bases in spite of the fact, that the basic biodegradable polymers, compared to conventional gum base or gum base ingredients, seem to be inferior.

Moreover, it has been suggested that this tan(delta) may even be lower than tan(delta) of conventional non-biodegradable chewing gums.

It should be noted that the tan(delta) should preferably be measured at near body-temperature in order to reflect the relevant properties of the chewing gum. Moreover, according to an embodiment of the invention, a chewing gum comprising a very significant amount of biodegradable polymers has been obtained having properties allowing commercial exploitation with respect to rheological parameters.

When the tan(delta) increases outside the linear viscoelastic region (LVR), a further advantageous embodiment of the invention has been obtained.

Typically, materials and chewing gums as such are evaluated and therefore designed in order to obtain certain rheological properties within the so-called linear viscoelastic region, also referred to as LVR within the art.

According to the invention, it has moreover been realized that nonlinear properties are extremely important when evaluating and establishing a chewing gum end product. The nonlinear properties may thus reflect the textural behavior of the chewing gum, i.e. during typical mechanical induced conditions rendering the chewing gum nonlinear viscoelastic properties. This feature will be described thoroughly below.

When the tan(delta) is tuned by means of at least one plasticizer, a further advantageous embodiment of the invention has been obtained.

According to the invention, relatively simple measures have been provided for the purpose of optimizing chewing gum comprising biodegradable or partly biodegradable polymers of chewing gums.

When the tan(delta) is increased by adding plasticizer to the chewing gum, a further advantageous embodiment of the invention has been obtained.

According to the invention, plasticizer may typically be added during mixing, i.e. when the final chewing gum is prepared on the basis of gum base or the chewing gum components as such.

When the tan(delta) is increased outside the linear viscoelastic region (LVR) by adding plasticizer to the chewing gum, a further advantageous embodiment of the invention has been obtained.

When, the slope of the tan(delta) outside the linear viscoelastic region (LVR) relative to oscillation torque is increased by adding further plasticizer to the chewing gum, a further advantageous embodiment of the invention has been obtained.

According to an embodiment of the invention, a decreased tan(delta) may of course be obtained by reducing the amount of plasticizers.

When the tan(delta) increases to at least 1.0 in the nonlinear viscoelastic region (non-LVR), a further advantageous embodiment of the invention has been obtained.

According to a preferred embodiment of the invention, the tan(delta) should preferably increase to at least 1.0 (one) when entering into the nonlinear region. Typically, the upper value of the tan(delta) is obtained at delamination, i.e. when a nonlinear measuring is no longer applicable by available dynamical measurement setups.

Preferably, the tan(delta) increases to at least 1.1 in the
nonlinear viscoelastic region (non-LVR).

More preferably, the tan(delta) increases to at least 1.2 in the
nonlinear viscoelastic region (non-LVR).

More preferably, the tan(delta) increases to at least 1.5 in the
nonlinear viscoelastic region (non-LVR).

Typically, the tan(delta) should increase to the above mentioned values within an oscillation torque of 10000-25000 microN·m.

When the tan(delta) increases to at least 1.0 in the nonlinear viscoelastic region (non-LVR), when an oscillation torque of 10000 microN·m has been reached, a further advantageous embodiment of the invention has been obtained.

Typically, oscillation torque may be measured by means of so-called SAOS-tests.

When the tan(delta) increases to at least 1.3 in the nonlinear viscoelastic region (non-LVR) when an oscillation torque of 10000 microN·m has been reached, when measured on chewed chewing gum, a further advantageous embodiment of the invention has been obtained.

When the tan(delta) increases to at least 1.3 in the nonlinear viscoelastic region (non-LVR), when an oscillation torque of 11000 microN·m has been reached, and when measured on chewed chewing gum, a further advantageous embodiment of the invention has been obtained.

When the tan(delta) increases to at least 1 within one decade from the transition between the linear viscoelastic region into the nonlinear viscoelastic region, when the tan(delta) measured as a function of oscillation torque, a further advantageous embodiment of the invention has been obtained.

When the tan(delta) is tuned to have a maximum of approximately 2.0 or preferably 1.7 when the oscillation torque is less than 13000 microN·m, a further advantageous embodiment of the invention has been obtained.

When the tan(delta) is measured at mouth temperature, a further advantageous embodiment of the invention has been obtained.

When the tan(delta) is measured at an oscillation frequency corresponding to typical chewing frequency, a further advantageous embodiment of the invention has been obtained.

When the tan(delta) is measured at an oscillation frequency of 1.0 Hz, a further advantageous embodiment of the invention has been obtained.

A further advantageous embodiment has been obtained when the plasticizers comprise fat, preferably in an amount of 0 to 15 % w/w.

A further advantageous embodiment has been obtained when the plasticizers comprise wax, preferably in an amount of 0 to 15 % w/w.

A further advantageous embodiment has been obtained when plasticizers comprise solubilizers, preferably in amount of 0 to 5 % w/w.

A further advantageous embodiment has been obtained when the plasticizers comprise flavor, preferably liquid flavor, preferably in an amount of 0 to 30 % w/w.

A further advantageous embodiment has been obtained when plasticizers comprise liquid sweeteners, preferably in an amount of 0 to 30 % w/w.

According to the invention, the chewing gum may comprise an amount of biodegradable polymers of 1 to 99% w/w.

According to a further advantageous embodiment of the invention, the chewing gum partly comprises non-biodegradable polymers.

The linear viscoelastic region (LVR) has a maximum oscillation torque within a range of 300 microN·m to 10000 microN·m, preferably within a range of 400 microN·m to 3000 microN·m. and most preferably within a range of 500 microN·m to 2000 microN·m.

Moreover, the tan(delta) critical is greater than 0.7, preferably greater than 0.8 preferably greater than 1.0 where the tan(delta)(crit) is the tan(delta) value corresponding to delta(crit) in a tan(delta) vs. oscillation torque measurement and where delta(crit) represents the critical oscillation torque determined in a G' vs. oscillation torque measurement, which describes the oscillation torque at the point where the material begins to deform, i.e. the point where the oscillation torque invokes a transition from the LVR to the non-LVR.

Preferably the tan(delta) critical is less than 1.0, preferably greater than 0.9 preferably greater than 0.8.

The biodegradable polymers may e.g. comprise poly(ester-carbonate) comprising monomers selected from the group consisting of lactide, glycolide, ε-caprolactone, δ-valerolactone, β-propiolactone, dioxanone (ester-ether), tri-methylene carbonate, ethylene carbonate, propylene carbonate, 5,5 di-methyl-1,3-dioxane-2-one and 5-methyl-1,3-dioxane-2-one.

The polyester may comprise a homopolymer, co-polymer or a ter-polymer.

The molecular weight of the degradable polymer is in the range of 500 -10,000 g/mol, within the range of 10,000 -100,000 g/mol or within the range of 100,000-1,000,000 g/mol.

Moreover, the invention relates to a method of manufacturing a biodegradable chewing gum comprising the steps of providing at least one biodegradable polymer and adding plasticizer to the said at least one biodegradable polymer in an amount suitable for tuning the balance between the loss modulus and the storage modulus.

### The drawings

The invention is explained in details with reference to the drawings where
fig. 1a-1c illustrate rheological properties of gum base formulations,
fig. 2a-2c illustrate rheological properties of unchewed chewing gums,
fig. 3a-3c illustrate rheological properties of chewed chewing gums
fig. 4a-4c illustrate rheological properties of chewed chewing gums tuned according to the invention.
fig. 5 illustrates a test setup applied for verification and tuning according to one embodiment of the invention.

### Detailed description

Table 1 refers to the involved gum bases and chewing gums.
Table 2 illustrates the basic formulation of 1021 chewing gum base.
Table 3 illustrates the basic formulation of 1023 chewing gum base.
Table 4 illustrates the basic formulation of 1025 chewing gum base.
Table 5 illustrates the basic formulation of 1020 chewing gum base.
Table 6 illustrates the basic formulation of CG SUB 4 chewing gum.
Table 7 illustrates the basic formulation of 1525-1530 and1556-1561 chewing gum.

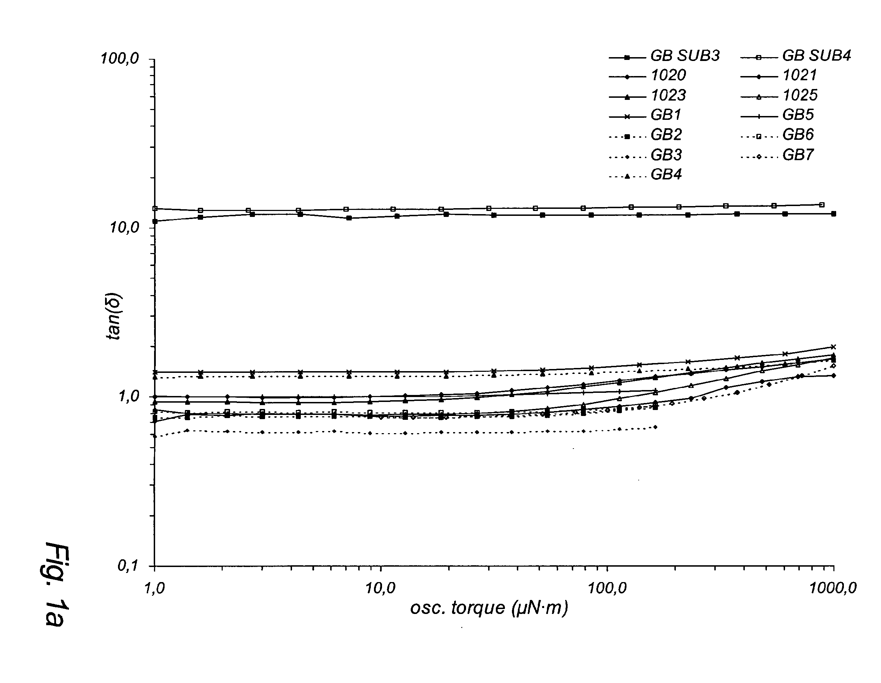

Fig. 1a to fig. 1c illustrate the rheological properties of gum bases tested and applied according to the invention.

Involved gum bases and chewing gums are listed in table 1.

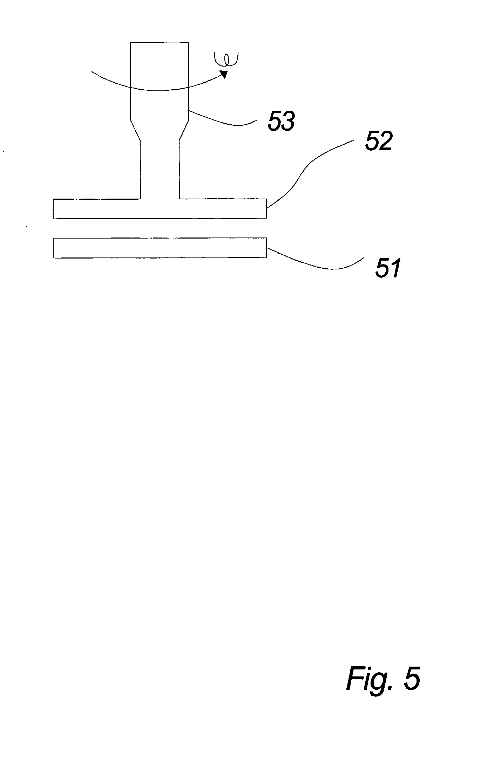

Generally, the below measurements have been performed as illustrated and described with reference to fig. 5. Moreover, the explaining associated to fig. 5 introduces the main rheological definitions referred to according to the invention.

The term gum base may refer broadly to a composition of elastomers, resins, fillers and softeners or e.g. a polymer itself.

According to conventional chewing gum manufacturing the gum base may be mixed with flavor, sweeteners, etc. into a final chewing gum and, if desired, subsequently be coated.

Fig. 1a to fig. 1c illustrate measuring at a temperature of 70 °C.

Fig. 1a to fig. 1c illustrate a number of gum bases. Details about the illustrated gum bases are described in table 1.

Fig. 1a illustrates the tan(delta) of a number of different gum bases as a function of oscillation torque (microN·m).

It is observed, that the tan(delta) of the GB SUB 3 and GB SUB 4 is significantly higher than the other group of gum bases.

It is noted, that the lower group of gum bases comprises both biodegradable, partly degradable and standard non-degradable gum bases.

No significant differences between the lower group of gum bases are observed.

An immediate thought is that the 100% biodegradable gum bases GB SUB 3 and GB SUB 4 are more or less useless for the purpose of obtaining an acceptable chewing gum texture.

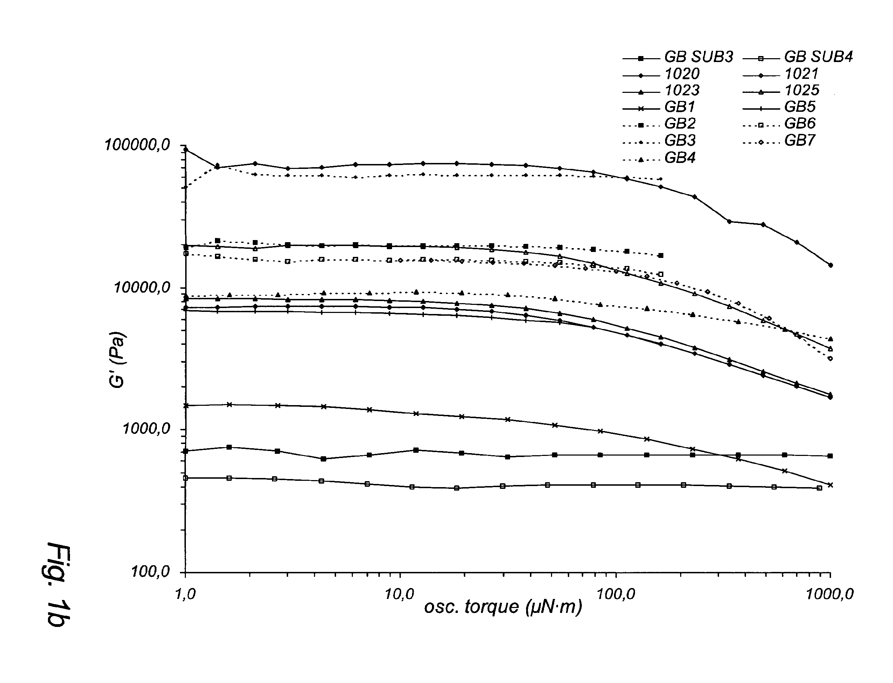

Fig. 1b illustrates the storage modulus G' (Pa) as a function of oscillation torque (microN·m) of the gum bases of fig. 1a.

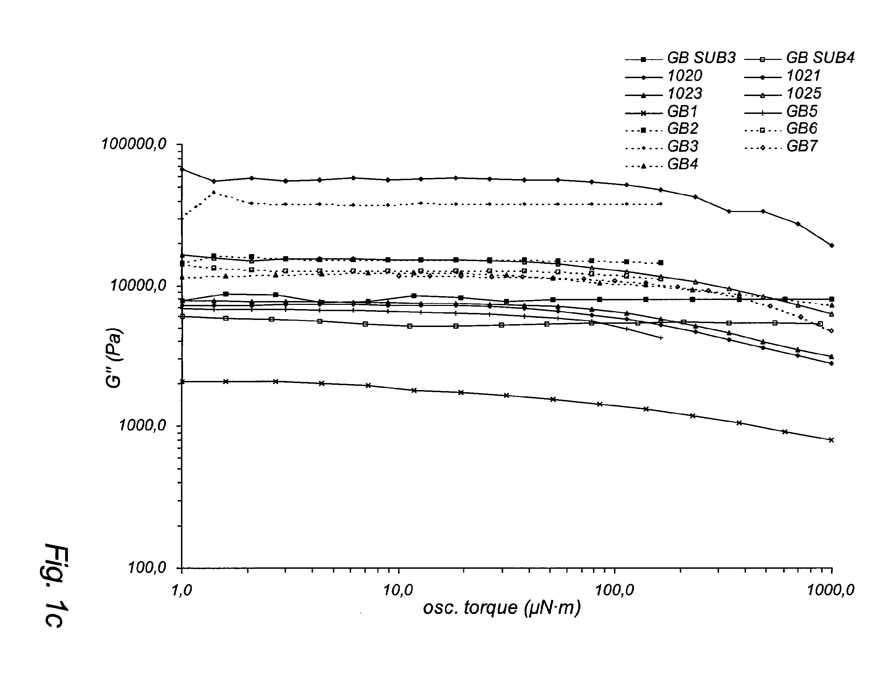

Fig. 1c illustrates the loss modulus G" (Pa) as a function of oscillation torque (microN·m) of the gum bases of fig. 1a.

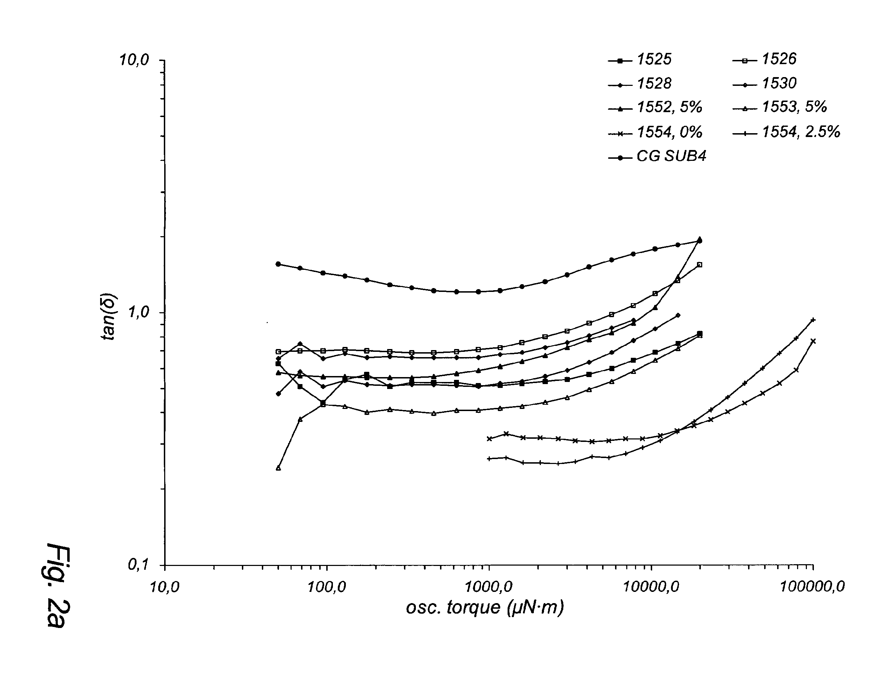

Fig. 2a to fig. 2c illustrate measurement at a temperature of 45 °C.

Fig. 2a illustrates the tan(delta) of a number of chewing gums based upon a selection of the gum base components as illustrated in fig. 1a to fig. 1c.

Fig. 2a to fig. 2c refer to un-chewed chewing gum.
Again, the tan(delta) is as measured as a function of oscillation torque (microN·m).

It is noted, that e.g. 1552 and 1553 show an increased tan(delta) even within the LVR (determined by G').

Moreover it is noted, that chewing gums prepared on the basis of biodegradable polymers apparently are comparable to conventional non-biodegradable chewing gums.

It is noted, that chewing gums should preferably exhibit an LVR of at least 300 microN·m in order to facilitate subsequent processing into the final chewing gum shape, e.g. by means of rolling and scoring. Moreover, subsequent processing includes coating, packaging and distribution. An LVR of less than the suggested limit would result in the obtained chewing gum having a somewhat viscous nature which is unable to maintain the desired dimensions.

And immediate impression is that all the evaluated chewing gums exhibit an acceptable minimum LVR.

Moreover, it should be noted, that the LVR should exhibit a maximum of not more than approximately 10000 microN·m in order to facilitate subsequent processing. An LVR which is greater than the suggested limit would result in a dry, crumpling substance.

It is noted, that both 1554 0% and 1554 2.5% seem to be less suitable for chewing gum.

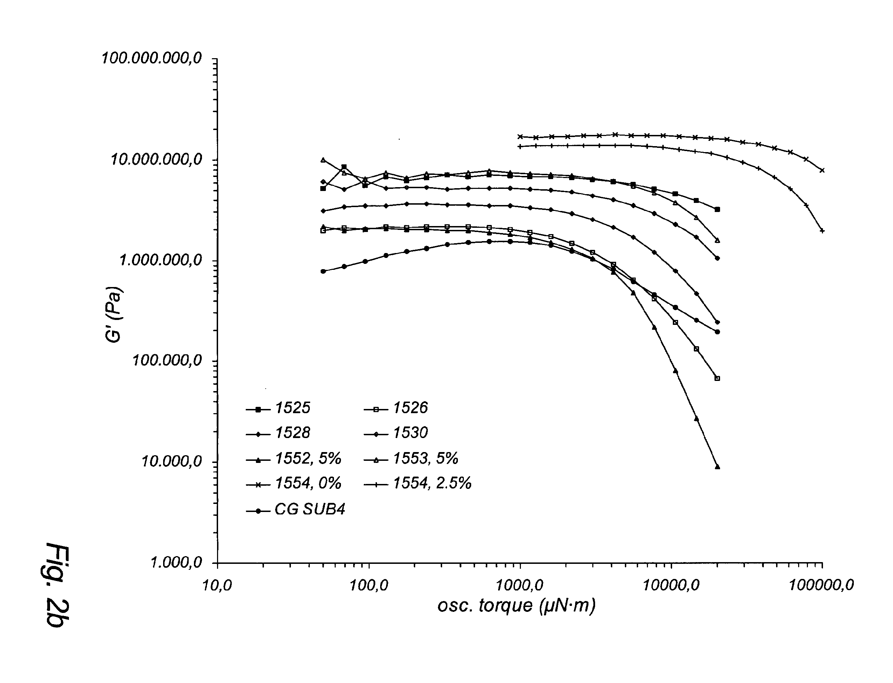

Fig. 2b illustrates the storage modulus G' (Pa) as a function of oscillation torque (microN·m) of the chewing gums of fig. 2a.

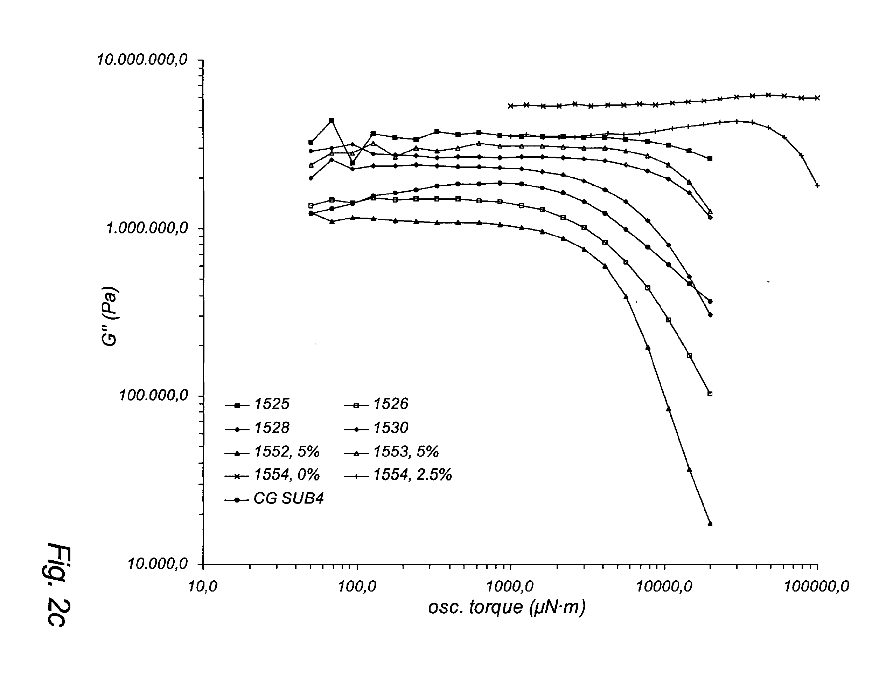

Fig. 2c illustrates the loss modulus G" (Pa) as a function of oscillation torque (microN·m) of the chewing gums of fig. 2a.

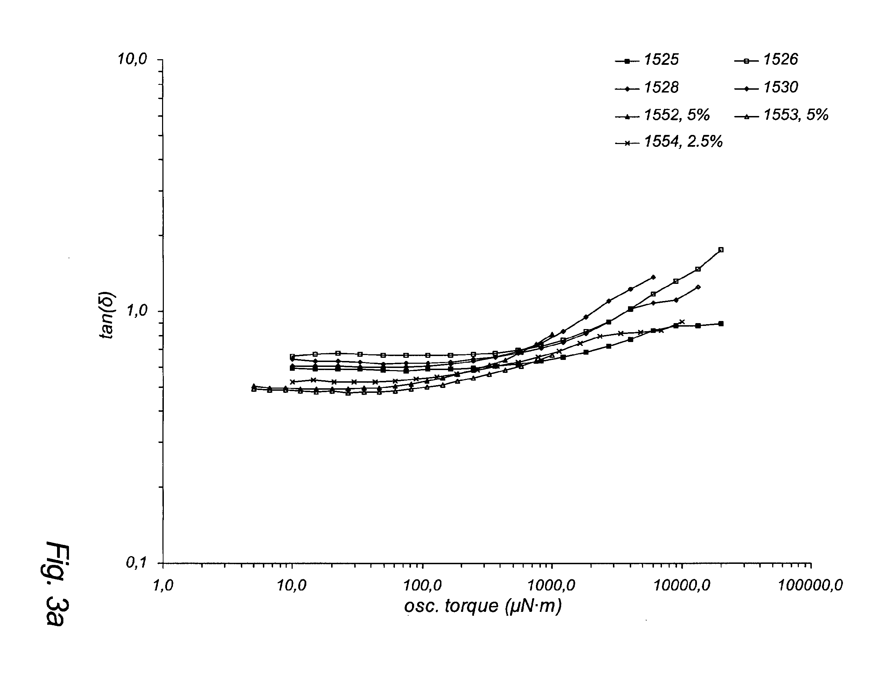

Fig. 3a to fig. 3c illustrate measuring at a temperature of 37 °C.

Fig. 3a to fig. 3c refer to chewed chewing gum.

Fig. 3a illustrates the tan(delta) of a number of chewing gums based upon a selection of the gum bases as illustrated in fig. 1a to fig. 1c.

Again, the tan(delta) is measured as a function of oscillation torque (microN·m).

The illustrated properties will now be commented with reference to the texture describing parameters as stated in table 1.

Initially it is noted, that the chewing gums 1526, 1528 and 1530 are acceptable or almost acceptable (1526 is a standard chewing gum and 1528 and 1530 partly comprise biodegradable polymers). It is moreover noted, that all the chewing gums never reaching a tan(delta) value of at least approximately 1.0 within the measurable range of oscillation torque, have been deemed unacceptable by texture evaluation.

It should be noted, that the chewing gum CG SUB 4 based on the gum base GB SUB 4 is not reproduced on the illustrated fig. 3a-c. However, the chewing gum was tested and deemed acceptable by a texture evaluation panel.

It is noted, that the slope of the tan(delta) of acceptable chewing gum is within a range of 0.2 and 0.9 when measured within the non-LVR.

Specifically it is noted, that a slope of the tan(delta) of the chewing gums 1526, 1528 and 1530 are 0.34 , 0.26 and 0.17 respectively.

| | 1525 | 1554 | 1530 | 1528 | 1526 | 1553 | 1552 |
|---|---|---|---|---|---|---|---|
| Slope tan (δ) | 0,05 | 0,10 | 0,17 | 0,26 | 0,34 | 0,95 | 2,28 |

The slope of the tan(delta) has been determined as the tangent to the curves within the non-LVR region, when measured by the last (here four) measuring points prior to measuring halt (e.g. at delamination or slip).

The slope of the the tan(delta) indicates that the non-LVR region is important for chewing gum evaluation in the sense that a small slope results in an overall rigid and stiff texture which is less suitable for chewing gum and a high slope results in a soft or buttery texture, also less suitable for chewing gum.

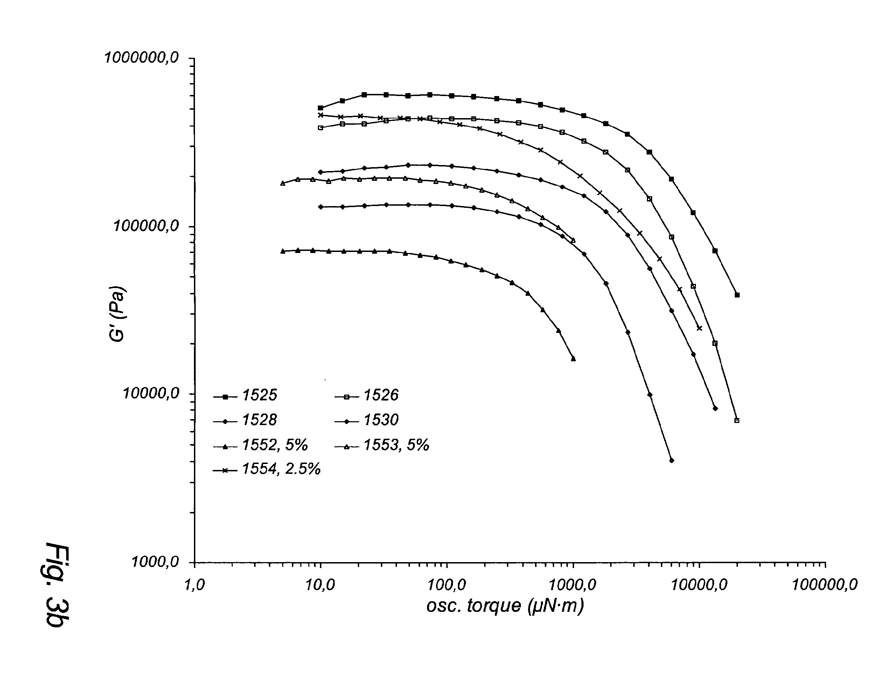

Fig. 3b illustrates the storage modulus G' (Pa) as a function of oscillation torque (microN·m) of the chewing gums of fig. 3a.

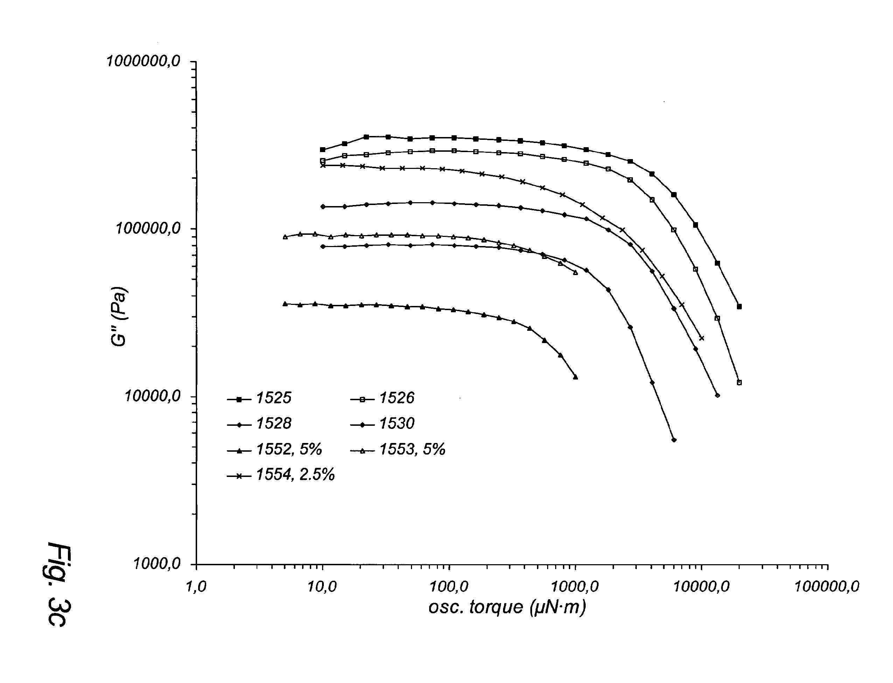

Fig. 3c illustrates the loss modulus G" (Pa) as a function of oscillation torque (microN·m) of the chewing gums of fig. 3a.

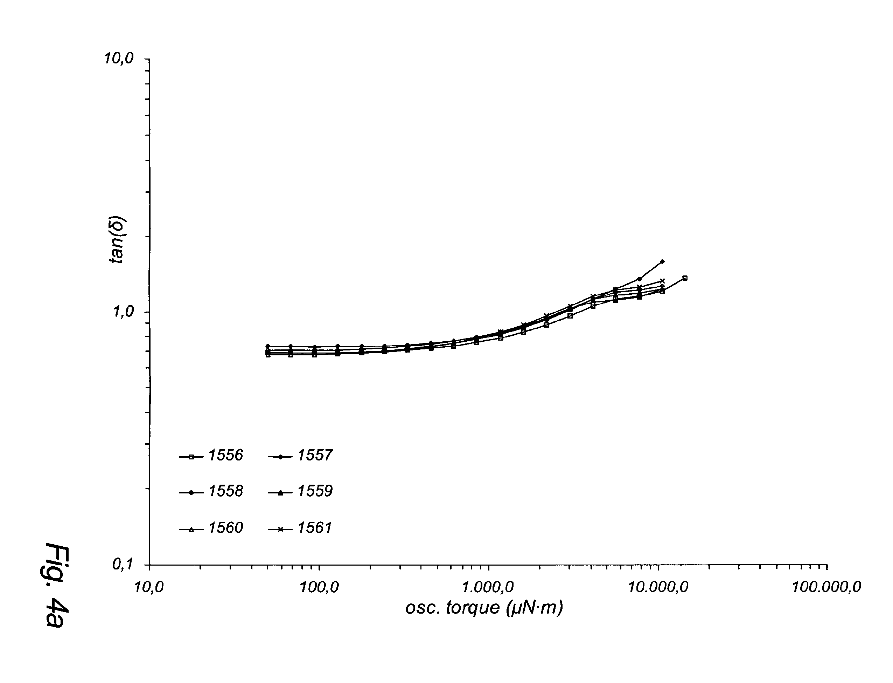

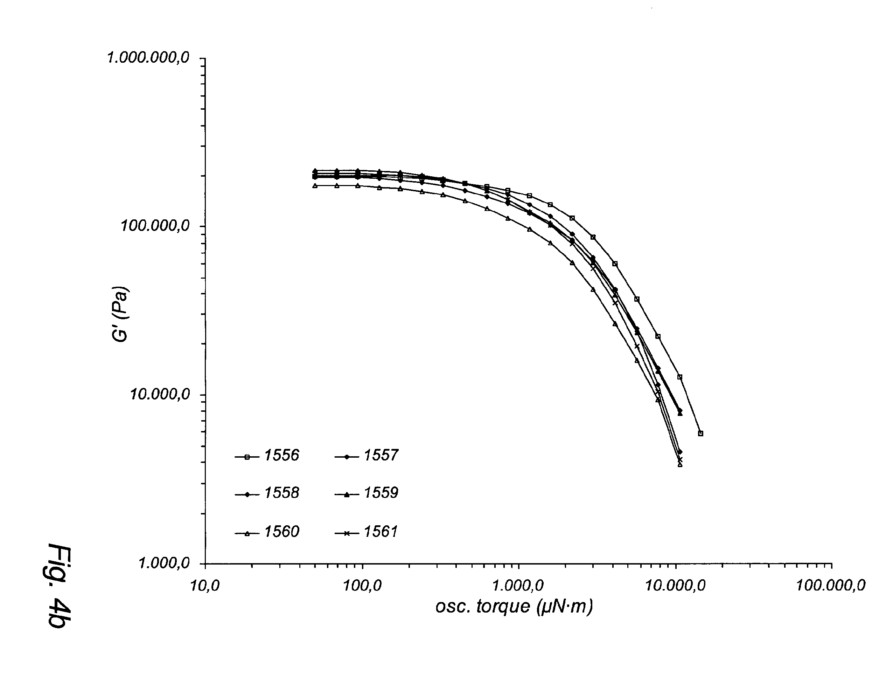

Fig. 4a to fig. 4c illustrate measuring at a temperature of 37 °C.

Fig. 4a to fig. 4c illustrate the tan(delta), G'(Pa) (storage modulus) and G"(Pa)(loss modulus) of chewing gum comprising biodegradable polymers as a function of oscillation torque (microN·m).

Fig. 4a to fig. 4c refer to a chewed chewing gum.

The illustrated chewing gums which are mutually in composition differ by the amount and type of plasticizer. For details about the illustrated chewing gums and the applied amount tuning plasticizers, see table 1.

Explanatory notes to the texture evaluation, as described in broad terms in table 1, will be discussed below.

Basically, a texture evaluation of the chewing gums revealed that an improved texture was obtained by an increased tan(delta) within the measurable area (i.e. the area in which the available measuring equipment are capable of dealing with) of the nonlinear viscoelastic region.

A short summary of comparisons between the chewing gum samples is stated below.

The texture (subjective) evaluation rated the chewing gums, starting from the best chewing gum: 1557, 1561,1560,1559,1558 and1556.

A remarkable result is therefore that a subjective evaluation may directly be correlated to objective physical properties and that the objective physical properties of chewing gums comprising biodegradable polymers may be tuned by means of variation of the plasticizers.

According to the invention, it has therefore been realized that biodegradable or partly biodegradable chewing gum may be adjusted by means of plasticizers.

Fig. 5 illustrates a measuring setup for measuring of different relevant rheological parameters applied according to the invention to obtain the desired end product, i.e. the chewing gum.

According to the invention, rheology may be applied for the study of the viscoelastic properties of gum base raw materials, gum bases and chewing gums. By applying for example small amplitude oscillating stress or strain (SAOS) to the sample it is possible to obtain information concerning the microscopic interactions in the sample. This information may be used for the prediction of properties related to texture and processing behavior of gum base raw materials, gum bases and chewing gums.

Deformation is measured both in the non-destructive region, i.e. the so-called linear viscoelastic region (LVR) as well as at higher stresses outside the LVR giving the shear stress/shear rate relationships.

The results of the viscoelastic measurements may be expressed as G' (storage modulus), G" (loss modulus)and tan (δ) = G"/G'.

G' represents elastic storage of energy and is a measure of how well structured the sample is. If the storage modulus is predominantly high the sample is highly structured and vices versa. If the structure is being destroyed the G' will decrease and the critical stress (or strain) amplitude can be determined giving information about resistance to deformation.

G" represents the viscous dissipation or loss of energy. If the loss modulus is high, the sample is predominantly viscous.

Tan (δ) represents phase difference between the input and the output. δ will increase with increasing viscous behavior and decrease with increasing elastic behavior.

δ(crit) represents the critical oscillation torque (or stress amplitude) determined in a G' vs. oscillation torque measurement, which describes the oscillation torque at the point where the material begins to deform , i.e. the point where the oscillation torque invokes a transition from the LVR to the non-LVR.

Tan (δ)(crit) is the tan (δ) value corresponding to δ(crit) in a tan (δ) vs. oscillation torque measurement.

Fig. 5 illustrates schematically an applicable dynamic measuring method, a so-called controlled-stress-technique, which may be applied for the evaluation of the viscoelastic properties of gum base raw materials, gum bases and chewing gums.

It should be mentioned, that other dynamic measuring methods may be applied for the measuring of the desired material properties, e.g. wave propagation or steady flow methods.

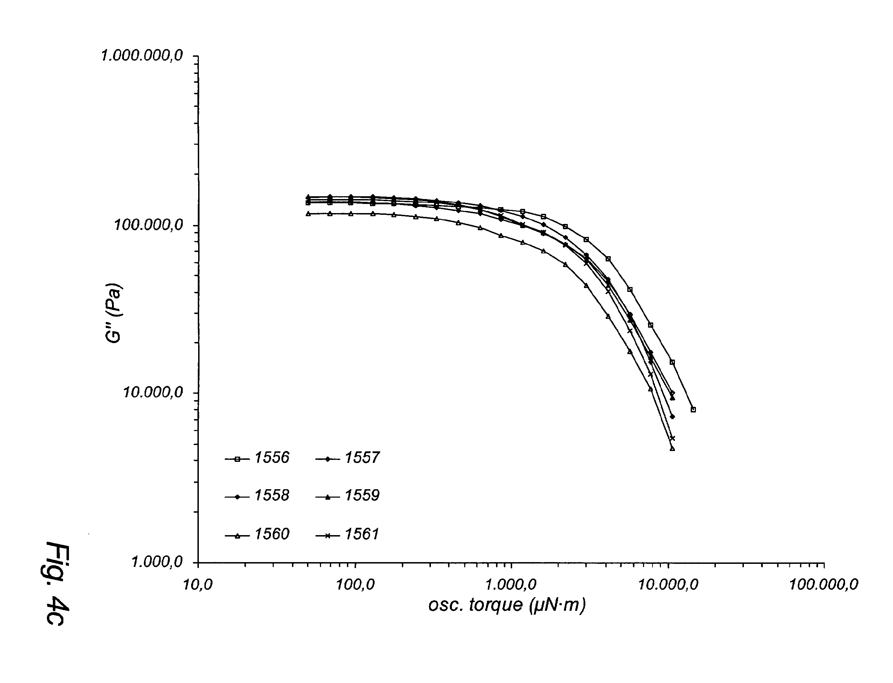

An applicable rheometer is AR 1000 supplied by TA Instruments. This rheometer has been applied for measuring in fig. 1a - to fig. 4c.

All the measurements have been made by means of a parallel plate, hatched plates, and a diameter of 2 (two) cm.

The illustrated measuring setup comprises a stationary base plate 51 arranged relative to a measuring head 52 arranged at the end of a drive rod 53.

The rod may rotate (and oscillate) around its axis with an angular velocity ω (rad s⁻¹) which is a result of a motor controlled induced stress.

When performing the above mentioned measurements parallel plates have been applied (in stead of for example a cone) due to the fact that parallel plates allow samples containing particles to be effectively measured.

The resulting angular movement of the disc, and thereby the resulting strain, may be measured by means of optical encoders (not shown) arranged for detection of the resulting strain.

It should be noted, that the above mentioned parameters G' storage modulus and G" loss modulus may be referred to by other names within the art, e.g. G' as elastic modulus and G" as viscous modulus. Still, the same definitions apply.
The storage modulus G' is a measure of a material's ability to store recoverable energy. This energy storage can be the result of the ability of a complex polymer, structural network, or a combination of these to recover stored energies after a deformation.
The linear viscoelastic region is a region where there is a linear relationship between stress and strain.
The loss modulus G" is a measure of the unrecoverable energy, which has been lost due to viscous flow.
The tan(delta) is defined as (loss modulus G"/storage modulus G'). In other words, the tan(delta) may express the relation between the materials ability to flow and perform reversible elastic regeneration of the shape and configuration of the material upon external mechanical deformation, i.e. the ability to recover.

According to the invention, the measurements have been performed under conditions as close as possible to application conditions, whenever possible.

Application conditions may e.g. refer to frequency, temperature and stress.

The relevant frequency has typically been adjusted at one Hz due to the fact that normal chewing comprises a dominant chew frequency component of approximately 1 (one) Hz.

It should of course be noted, that higher and lower frequency components may be relevant in order to evaluate and design a chewing gum. However, the most relevant frequencies relevant for evaluation will be the frequencies in a band around the above stated one Hz.

**Table 1. Chewing gum and gum base references**

| **Gum base No.** | **Corresponding Chewing gum No.** | **Characteristic** | **Texture evaluation** |
|---|---|---|---|
| GB Sub 3 | CG Sub 3 | GB: 100 % elastomer sub 3 | Rigid, hard, plastic. Not acceptable texture |
| GB Sub 4 | CG Sub 4 | GB: 100 % elastomer sub 4 | Rigid, hard, plastic. Not acceptable texture |
| 1020 | 1525 | GB: 7 % elastomer substituted with elastomer sub. 2, 43 % resins and PVAc substituted with PVAc sub | Crumbling, stiff, plastic Not acceptable texture |
| 1021 | 1526 | Conventional GB | Spongy, elastic, soft Acceptable pleasant texture |
| 1023 | 1528 | GB: 20 % PVAc substituted with PVAc sub | Spongy, elastic, tough Acceptable texture |
| 1025 | 1530 | GB: 40 % Resins+PVAc substituted with PVAc sub | Plastic, soft, tough Almost acceptable texture |
| GB2 | 1552- 5% | CG: 5 % Lemon flavor | Buttery, soft, viscous Not acceptable texture |
| | | Conventional GB | |
| 1020 | 1553- 5% | CG: 5 % Lemon flavor | Dry, buttery, viscous Not acceptable texture |
| | | GB: 7 % elastomer substituted with elastomer sub. 2, 43 % resins and PVAc substituted with PVAc sub | |
| 1020 | 1554- 0% | CG: 0 % Lemon flavor GB: 7 % elastomer substituted with elastomer sub. 2, 43 % resins and PVAc substituted with PVAc sub | Hard, crumbling, disintergrates Not acceptable texture |
| 1020 | 1554-2.5 % | 2,5 % Lemon flavor | Hard, crumbling, rigid Not acceptable texture |
| | | GB: 7 % elastomer substituted with elastomer sub. 2, 43 % resins and PVAc substituted with PVAc sub | |
| 1025 | 1556 | GB: 40 % Resins+PVAc substituted with PVAc sub. | Plastic, soft, tough Almost acceptable texture |
| 1023 | 1557 | GB: 20 % PVAc substituted with PVAc sub | Spongy, elastic, tough Acceptable texture |
| 1025 | 1558 | CB: 3 % lycasin less than 1556 | Plastic, soft, tough Almost acceptable texture |
| 1025 | 1559 | CG: 3 % lycasin more than 1556 | Plastic, soft, tough Almost acceptable texture |
| 1025 | 1560 | CG: 0.1 % lecithin more than 1556 | Spongy, plastic, soft Acceptable texture |
| 1025 | 1561 | CG: 0.2 % lecithin more than 1556 | Spongy, plastic, soft Acceptable texture |
| Conventional GB 1 | Conventional CG 1 | Conventional GB for sugarfree CG | Spongy, elastic, soft Acceptable pleasant texture |
| Conventional GB 2 | Conventional CG 2 | Conventional GB for sugarfree CG | Spongy, elastic, soft Acceptable pleasant texture |
| Conventional GB 3 | Conventional CG 3 | Conventional GB for sugarfree CG | Spongy, elastic, soft Acceptable pleasant texture |
| Conventional GB 4 | Conventional CG 4 | Conventional bubble gum | Very spongy, elastic, tough Acceptable pleasant texture |
| Conventional GB 5 | Conventional CG 5 | Conventional GB for sugarfree CG | Spongy, elastic, soft Acceptable pleasant texture |
| Conventional GB 6 | Conventional CG 6 | Conventional GB for sugarfree CG | Spongy, elastic, soft Acceptable pleasant texture |
| Conventional GB 7 | Conventional CG 7 | Conventional GB for medical CG | Spongy, elastic, soft Acceptable pleasant texture |

| | | | |
|---|---|---|---|
| GB: Gum base CG: Chewing gum PVAc sub.: Poly(D,L-lactid-co-ε-caprolactone), Tg=31 °C, Mn=5.600 g/mol. | | | |

Elastomer sub. 2: 50 % Poly(ε-caprolactone-co-trimethylecarbonate), Mn=255.000 g/mol, Tg= -53°C and 50 % Poly((ε-caprolactone-co-trimethylecarbonate), Mn=350.000 g/mol, Tg= -54°C by weight.

Elastomer sub. 3: Poly(D,L-lactid-co-ε-caprolactone), Tg=18°C, Mw=37.000 g/mol. Elastomer sub. 4: Poly(D,L-lactid-co-ε-caprolactone), Tg=15°C, Mw=36.000 g/mol.

The chewing gums 1556-1561 basically refer to the same formulation. However, when the amount of plasticizer is increased, the amount of sorbitol is decreased correspondingly, thereby maintaining the same basic chewing gum formulation as described in table 7. Likewise, the amount of sorbitol is increased correspondingly, when the amount of plasticizer is decreased.

The below described gum bases of table 2 to table 5 and chewing gums of table 6 and 7 are made according to the following processes by conventional methods.

### Chewing gum base

Chewing gum base is conventionally prepared using e.g. a batch mixer, a sigma blade mixer, using a mixing time of about one to four hours per batch. Typically, predetermined amounts of elastomers, resins and fillers are added to a heated sigma blade mixer having a front to rear blade speed ratio of about 2:1. After the initial ingredients have massed homogeneously, a balance of elastomers, resins, filler, softeners/emulsifiers, waxes (when used) and other ingredients are added sequentially to the batch mixer and blended until a homogeneous mass is attained. The final mass temperature can be between 80 degree C and 120 degree.C. The completed molten mass is emptied from the mixing kettle into coated or lined pans, extruded or cast into any desirable shape and allowed to cool off and solidify.

### Chewing gum

The gum base can either be added in a solid form and then softened by means of heating from the jacket of the mixer or from frictional heat generated during the mixing process, or it can be added in the melted form.

All of the chewing gum components selected for the particular type of chewing gum to be processed are mixed thoroughly in any conventional type of kneading or mixing vessel such as e.g. a kettle provided with mixing means like e.g. horizontally placed Z-shaped arms, which are capable of intimately mixing the selected chewing gum components to produce a homogeneous chewing gum mass. After mixing the chewing gum it is unloaded and formed using conventional steps for this which are known in the art including forming a chewing gum into e.g. pillows, sticks and cores. The final mass temperature when emptied from the mixer can be between 40°C and 70°C.

### Coating

After curing or solidifying the chewing gum elements are coated. The coating can be a hard coating, a soft coating or a film coating of any type that is known in the art, or a combination of such coating.

**Table 2: illustrates the basic formulation of 1021 gum base (1526)**

| Ingredient | % |
|---|---|
| Elastomer HW | 20 |
| Elastomer LW | |
| PVA LW | 40 |
| Resin hydrogenated | |
| Resin polymerized | |
| Fat | 25 |
| Emulsifier | |
| Wax LW | |
| Wax HW | |
| Talc | 15 |

**Table 3: illustrates the basic formulation of 1023 gum base (1528)**

| Ingredient | % |
|---|---|
| Elastomer HW | 20 |
| Elastomer LW | |
| Resin substitute | 20 |
| Resin hydrogenated | 20 |
| Resin polymerized | |
| Fat | 25 |
| Emulsifier | |
| Wax LW | |
| Wax HW | |
| Talc | 15 |

**Table 4: illustrates the basic formulation of 1025 gum base (1530)**

| Ingredient | % |
|---|---|
| Elastomer HW | 20 |
| Elastomer LW | |
| Resin substitute | 40 |
| Fat | 25 |
| Emulsifier | |
| Wax LW | |
| Wax HW | |
| Talc | 15 |

**Table 5: illustrates the basic formulation of 1020 gum base (1525)**

| Ingredient | % |
|---|---|
| Elastomer substitute | 7 |
| Resin substitute | 43 |
| Fat | 23 |
| Emulsifier | |
| Wax LW | |
| Wax HW | |
| Talc | 27 |

The below tables 6 and 7 refer to chewing gum formulation.

It should be noted, that 1526 and 1528 (1525-1530, 1556-1561) are manufactured on the basis of gum base, whereas CG SUB 4 is made on the basis of the biodegradable polymer GB SUB 4 itself.

**Table 6: Chewing gum formulation CG SUB 4**

| Ingredient | % standardiseret |
|---|---|
| GB SUB 4 | 40 |
| Sorbitol powder | 40 |
| Lecithin | 0,2 |
| Lycasin | 6,0 |
| Peppermint oil | 1,70 |
| Peppermint | |
| Menthol crystals | 0,9 |
| Menthol powder | |
| Aspertame | 0,2 |
| Acesulfame | 0,2 |
| Xylitol | 10,8 |

**Table 7: Chewing gum formulation 1525-1530,1556-1561**

| Ingredient | % |
|---|---|
| GB | 40 |
| Sorbitol powder | 45,60 |
| Lycasin | 6,00 |
| Peppermint | 1,50 |
| Menthol | 0,50 |
| Aspertame | 0,20 |
| Acesulfame | 0,20 |
| Xylitol | 6,00 |

### Chewing gum base formulation

Generally, a chewing gum base formulation comprises one or more elastomeric compounds which may be of synthetic or natural origin, one or more resin compounds, fillers, softening compounds and minor amounts of miscellaneous ingredients such as antioxidants, colorants and others.

As defined herein, the chewing gum center comprises at least one physical, chemical or biological degradable elastomeric or resinous polymer. In contrast to currently used types of elastomers and resins, such polymers can be degraded in the environment after mastication of the chewing gum. This gives rise to less environmental pollution than chewing gums based on non-degradable polymers, as the used chewing gum will eventually disintegrate and/or be removed more readily by physical or chemical means from the site where it is dumped.

As applied herein, the expression "degradable polymer" refers to a chewing gum base component or a chewing gum base which, after dumping the chewing gum or even during chewing, is capable of undergoing a physical, chemical and/or biological degradation. Hereby the dumped chewing gum waste becomes more readily removed from the site of dumping or is eventually disintegrated to lumps or particles, which are no longer recognizable as chewing gum remnants. The degradation or disintegration of such degradable polymers can be effected or induced by physical factors such as temperature, light, moisture or by chemical factors such as hydrolysis caused by a change in pH or by the action of appropriate enzymes capable of degrading the polymers.

In the present context, suitable examples of such environmental or biological degradable chewing gum base polymers include a polymer selected from the group consisting of esters, carbonates, ethers, amides, urethanes, peptides, homopolymers of amino acids such as polylysine, and proteins including derivatives hereof such as e.g. protein hydrolysates including a zein hydrolysate.

Preferred polymers include polymers selected from the group consisting of degradable homopolymers, copolymers, terpolymers, block- and graftpolymers.

A preferred compound is a polyester and particularly useful compounds of this type including polyester polymers obtained by the polymerisation of one or more cyclic esters as disclosed in the US patent No. 5,672,367 which is incorporated herein by reference. The polymers disclosed in this reference are characterized by having chemical unstable bonds in the polymer chain which can be broken e.g. hydrolytically or by exposure to light.

An important feature of the degradable polymers as used herein is that they contain chemical unstable bonds that can be broken in the chewed chewing gum under environmental conditions. In the present context, the term "environmental condition" denotes indoor and outdoor locations and the temperature, light and humidity conditions prevailing in such environments. It will be appreciated that the rate of degradation of the degradable polymer in chewing gum remnants dropped in a given environment will depend on the above physical conditions. In preferred embodiments, the degradable polymer is one where, under any given environmental conditions except extreme cold temperature conditions, i.e. at temperatures below 0°C, at least 5% of unstable bonds, preferably at least 10%, more preferably at least 15% including at least 25% of unstable bonds are broken after one month to 12 months under environmental conditions.

In presently preferred embodiments, the at least one degradable elastomeric or resinous polymer of the coated chewing gum element is a polyester polymer made from a cyclic ester selected from the group of lactide, glycolide, trimethylene carbonate, δ-valerolactone, β-propiolactone and ε-caprolactone. Such polymers may be homopolymers, co-or terpolymers, including block or graft co-polymers, such as e.g. a copolymer of lactide and ε-caprolactone including such a copolymer wherein the initial molecular weight ratio between the lactide and ε-caprolactone is in the range of 99:1 to 80:20 such as in the range of 95:5 to 90:10, and a copolymer of ε-caprolactone and δ-valerolactone.

Generally, chewing gum base formulations include elastomeric and resinous polymers of different molecular weights. Accordingly, the degradable polymer can be of an average molecular weight (M_{w}) that is in the range of 500 to 10000 g/mol, the range of 10,000 to 100,000 g/mol or the range of 100,000 to 1,000,000 g/mol.

The chewing gum centers as defined above may comprise a gum base part where all of the elastomeric or resinous components are degradable polymers. However, it is within the scope of the invention that the gum base part, in addition to one or more degradable polymers, contains a proportion of non-degradable polymeric elastomers and/or resins which may be natural or synthetic polymers. The proportion of such non-degradable polymers may be in the range of 1-99% by weight including the range of 5 to 90% by weight such as in the range of 10-50% by weight.

In this context, useful synthetic elastomers include, but are not limited to, synthetic elastomers listed in Food and Drug Administration, CFR, Title 21, Section 172,615, the Masticatory Substances, Synthetic) such as polyisobutylene with a gel permeation chromatography (GPC) average molecular weight in the range of about 10,000 to about 1,000,000 including the range of 50,000 to 80,000, isobutylene-isoprene copolymer (butyl elastomer), styrene-butadiene copolymers e.g. having styrene-butadiene ratios of about 1:3 to about 3:1, polyvinyl acetate (PVA) having a GPC average molecular weight in the range of 2,000 to about 90,000 such as the range of 3,000 to 80,000 where the higher molecular weight polyvinyl acetates are typically used in bubble gum base, polyisoprene, polyethylene, vinyl acetate-vinyl laurate copolymer e.g. having a vinyl laurate content of about 5 to about 50% by weight such as 10 to 45% by weight of the copolymer, and combinations hereof.

It is e.g. common in the industry to combine a synthetic elastomer having a high molecular weight and a low-molecular-weight elastomer in a gum base. Presently, preferred combinations of synthetic elastomers include, but are not limited to, polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof.

Useful natural non-degradable elastomers include the elastomers listed in Food and Drug Administration, CFR, Title 21, Section 172,615, as "Masticatory Substances of Natural Vegetable Origin" including natural rubber compounds such as smoked or liquid latex and guayule and other natural gums including jelutong, lechi caspi, massaranduba balata, sorva, perillo, rosindinha, massaranduba chocolate, chicle, nispero, gutta hang kang, and combinations thereof. The preferred synthetic elastomer and natural elastomer concentrations vary depending on whether the chewing gum in which the base is used is adhesive or conventional, bubble gum or regular gum, as discussed below. Presently preferred natural elastomers include jelutong, chicle, massaranduba balata and sorva.

In accordance with the invention, the chewing gum base components which are useful may include one or more resinous compounds contributing to obtain the desired masticatory properties and acting as plasticizers for the elastomers of the gum base composition. In the present context, useful elastomer plasticizers include, but are not limited to, natural rosin esters, often referred to as ester gums including as examples glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins, pentaerythritol esters of rosins. Other useful resinous compounds include synthetic resins such as terpene resins derived from alpha-pinene, beta-pinene, and/or d-limonene, natural terpene resins; and any suitable combinations of the foregoing. The preferred elastomer plasticizers will also vary depending on the specific application, and on the type of elastomer(s) being used.

A chewing gum base formulation may, if desired, include one or more fillers including e.g. magnesium and calcium carbonate, sodium sulphate, ground limestone, silicate compounds such as magnesium and aluminium silicate, kaolin and clay, aluminium oxide, silicium oxide, talc, titanium oxide, mono-, di- and tricalcium phosphates, cellulose polymers, such as wood, and combinations thereof. The fillers may also include natural organic fibers such as fruit vegetable fibers, grain, rice, cellulose and combinations thereof.
As used herein the term "plasticizer" designates an ingredient as defined in claim 1, which softens the gum base or chewing gum formulation and encompasses waxes, fats, emulsifiers, surfactants and solubilisers.

A gum base formulation may, in accordance with the present invention, comprise one or more fats e.g. tallow, hydrogenated tallow, any completely or partially hydrogenated animal fats, completely hydrogenated and partially hydrogenated vegetable oils or fats, cocoa butter, degreased cocoa butter, glycerol monostearate, glycerol triacetate, lecithin, mono-, di- and triglycerides, acetylated monoglycerides, fatty acids (e.g. stearic, palmitic, oleic and linoleic acids), and/or combinations thereof.

To soften the gum base further and to provide it with water binding properties, which confer a pleasant smooth surface to the gum base and reduce its adhesive properties, one or more emulsifiers is/are usually added to the composition, typically in an amount of 0 to 18% by weight, preferably 0 to 12% weight of the gum base. Mono-and diglycerides of edible fatty acids, lactic acid esters and acetic acid esters of mono- and di- and triglycerides of edible fatty acids, acetylated mono and diglycerides, sucrose polyesters or sugar esters of edible fatty acids including those disclosed in WO 00/25598, which is incorporated herein by reference, Na-, K-, Mg-and Ca-stearates, lecithin, hydroxylated lecithin, glycerol monostearate, glycerol triacetate, fatty acids (e.g. stearic, palmitic, oleic and linoleic acids), propylgallates and combinations thereof are examples of conventionally used emulsifiers which can be added to the chewing gum base. In case of the presence of a biological or pharmaceutical active ingredient as defined below, the formulation may comprise certain specific emulsifiers and/or solubilisers in order to disperse and release the active ingredient.

Waxes are conventionally used for the adjustment of the consistency and for softening of the chewing gum base when preparing chewing gum bases. In connection with the present invention any conventionally used and suitable type of wax may be used, such as for instance rice bran wax, polyethylene wax, petroleum wax (refined paraffin and microcrystalline wax), paraffin, bees' wax, carnauba wax, and candelilla wax.

Furthermore, the gum base formulation may, in accordance with the present invention, comprise colorants and whiteners such as FD&C-type dyes and lakes, fruit and vegetable extracts, titanium dioxide and combinations thereof. Further useful chewing gum base components include antioxidants, e.g. butylated hydroxytoluene (BHT), butyl hydroxyanisol (BHA), propylgallate and tocopherols, and preservatives.

The composition of chewing gum base formulations which are admixed with chewing gum additives as defined below can vary substantially depending on the particular product to be prepared and on the desired masticator and other sensory characteristics of the final product. However, typical ranges (weight%) of the above gum base components are: 5 to 100% by weigth elastomeric compounds, 5 to 55% by weight resin, 0 to 50% by weight filler, 5 to 35% by weight plasticizer and 0 to 1% by weight of miscellaneous ingredients such as antioxidants, colorants, etc.

### Chewing gum additives

A chewing gum center formulation comprises, in addition to the above water-insoluble gum base components, a generally water-soluble part comprising a range of chewing gum additives. In the present context, the term "chewing gum additive" is used to designate any component, which in a conventional chewing gum manufacturing process is added to the gum base. The major proportion of such conventionally used additives is water soluble, but water-insoluble components, such as e.g. water-insoluble flavoring compounds, can also be included.

In the present context, chewing gum additives include bulk sweeteners, high intensity sweeteners, flavoring agents, softeners, emulsifiers, coloring agents, binding agents, acidulants, fillers, antioxidants and other components such as pharmaceutically or biologically active substances, conferring desired properties to the finished chewing gum product.

Suitable bulk sweeteners include both sugar and non-sugar sweetening components. Bulk sweeteners typically constitute from about 5 to about 95% by weight of the chewing gum, more typically about 20 to about 80% by weight such as 30 to 70% or 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomalt, erythritol, lactitol and the like, alone or in combination.

High intensity artificial sweetening agents can also be used alone or in combination with the above sweeteners. Preferred high intensity sweeteners include, but are not limited to sucralose, aspartame, salts of acesulfame, alitame, saccharin and its salts, cyclamic acid and its salts, glycyrrhizin, dihydrochalcones, thaumatin, monellin, sterioside and the like, alone or in combination. In order to provide longer lasting sweetness and flavor perception, it may be desirable to encapsulate or otherwise control the release of at least a portion of the artificial sweeteners. Techniques such as wet granulation, wax granulation, spray drying, spray chilling, fluid bed coating, conservation, encapsulation in yeast cells and fiber extrusion may be used to achieve desired release characteristics. Encapsulation of sweetening agents can also be provided using another chewing gum component such as a resinous compound.

Usage level of the artificial sweetener will vary considerably and will depend on factors such as potency of the sweetener, rate of release, desired sweetness of the product, level and type of flavor used and cost considerations. Thus, the active level of artificial sweetener may vary from about 0.001 to about 8% by weight (preferably from about 0.02 to about 8% by weight). When carriers used for encapsulation are included, the usage level of the encapsulated sweetener will be proportionately higher. Combinations of sugar and/or non-sugar sweeteners can be used in the chewing gum formulation processed in accordance with the invention. Additionally, the softener may also provide additional sweetness such as with aqueous sugar or alditol solutions.

If a low calorie gum is desired, a low caloric bulking agent can be used. Examples of low caloric bulking agents include polydextrose, Raftilose, Raftilin, fructooligosaccharides (NutraFlora^{®}), palatinose oligosaccharides; guar gum hydrolysates (e.g. Sun Fiber^{®}) or indigestible dextrins (e.g. Fibersol^{®}). However, other low calorie-bulking agents can be used.

Further chewing gum additives, which may be included in the chewing gum mixture processed in the present process, include surfactants and/or solubilisers, especially when pharmaceutically or biologically active ingredients are present. As examples of types of surfactants to be used as solubilisers in a chewing gum composition according to the invention reference is made to H.P. Fiedler, Lexikon der Hilfstoffe fur Pharmacie, Kosmetik und Angrenzende Gebiete, page 63-64 (1981) and the lists of approved food emulsifiers of the individual countries. Anionic, cationic, amphoteric or non-ionic solubilisers can be used. Suitable solubilisers include lecithin, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllatylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. In the presence of an active ingredient the chewing gum may preferably also comprise a carrier known in the art.

The chewing gum centers provided herein may contain aroma agents and flavoring agents including natural and synthetic flavorings e.g. in the form of natural vegetable components, essential oils, essences, extracts, powders, including acids and other substances capable of affecting the taste profile. Examples of liquid and powdered flavorings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits (e.g. lemon, bergamot and orange) as mentioned above.

The chewing gum flavor may be a natural flavoring agent, which is freeze-dried, preferably in the form of a powder, slices or pieces of combinations thereof. The particle size may be less than 3 mm, such as less than 2 mm, more preferred less than 1 mm, calculated as the longest dimension of the particle. The natural flavoring agent may be in a form where the particle size is from about 3 µm to 2 mm, such as from 4 µm to 1 mm. Preferred natural flavoring agents include seeds from a fruit e.g. from strawberry, blackberry and raspberry.

Various synthetic flavors, such as mixed fruit flavors may also be used in the present chewing gum centers. As indicated above, the aroma agent may be used in quantities smaller than those conventionally used. The aroma agents and/or flavors may be used in an amount of from 0.01 to about 30% by weight (preferably from 0.01 to about 15% by weight) of the final product depending on the desired intensity of the aroma and/or flavor used. Preferably, the content of aroma/flavor is in the range of 0.2 to 3% by weight of the total composition.

Also various acids are used typically in combination with fruit flavors, such as adipinic acid, succinic acid, fumaric acid, or salts thereof or salts of citric acid, tartaric acid, malic acid, acetic acid, lactic acid, phosphoric acid and glutaric acid.

In one embodiment, the chewing gum center composition comprises a pharmaceutical or biological active substance. Examples of such active substances, a comprehensive list of which is found e.g. in WO 00/25598 and which is incorporated herein by reference, include drugs, dietary supplements, antiseptic agents, pH adjusting agents, anti-smoking agents and substances for the care or treatment of the oral cavity and the teeth such as hydrogen peroxide and compounds capable of releasing urea during chewing. Examples of active substances in the form of agents adjusting the pH in the oral cavity include: acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulphates or oxides of sodium, potassium, ammonium, magnesium or calcium, especially magnesium and calcium.

The gum center of coated chewing gum elements according to the invention can have any form, shape or dimension that permits the chewing gum center to be coated by use of any conventional coating process including those described in the following. Accordingly, the gum center may e.g. be in a form selected from a pellet, a cushion-shaped pellet, a stick, a tablet, a chunk, a pastille, a pill, a ball and a sphere.

## Claims

1. Chewing gum comprising gum base, sweetener and flavor, wherein at least a part of said gum base comprises at least one biodegradable polymer,
wherein the amount of plasticizers in the chewing gum is at least 5% w/w,
wherein said plasticizers are selected from the group consisting of emulsifiers, fat, wax, flavor, solubilizers, surfactants and liquid sweeteners,
wherein said chewing gum comprises an amount of emulsifiers of less than 5% w/w, and where
tan(delta) is at least 0.6 within the linear viscoelastic region (LVR) of the chewing gum and
the tan(delta) is defined as (loss modulus G"/storage modulus G'),
wherein the tan(delta) is measured at 37°C and at an oscillation frequency of 1.0Hz, wherein tan(delta)(crit) is greater than 0.8,
where the tan(delta)(crit) is the tan(delta) value corresponding to delta(crit) in a tan(delta) vs. oscillation torque measurement and where the delta (crit) represents the critical oscillation torque determined in a G' vs. oscillation torque measurement where the oscillation torque invokes a transition from the LVR to the non-LVR.

2. Chewing gum according to claim 1,
wherein the tan(delta) increases outside the linear viscoelastic region (LVR).

3. Chewing gum according to claim 1 or 2,
wherein the tan(delta) is tuned by means of at least one plasticizer.

4. Chewing gum according to any of claims 1 to 3,
wherein the tan(delta) is increased outside the linear viscoelastic region (LVR) by adding plasticizer to the chewing gum.

5. Chewing gum according to any of claims 1 to 4,
wherein the slope of the tan(delta) outside the linear viscoelastic region (non-LVR) relative to oscillation torque is increased by adding further plasticizer to the chewing gum.

6. Chewing gum according to any of claims 1 to 5,
wherein the tan(delta) increases to at least 1.0 in the
nonlinear viscoelastic region (non-LVR)

7. Chewing gum according to any of claims 1 to 6,
wherein the tan(delta) increases to at least 1.0 in the
nonlinear viscoelastic region (non-LVR) when an oscillation torque of 10000 microN·m has been reached.

8. Chewing gum according to any of claims 1 to 7,
wherein the tan(delta) increases to at least 1 within one decade from the transition between the linear viscoelastic region into the nonlinear viscoelastic region, when the tan(delta) measured as a function of oscillation torque.

9. Chewing gum according to any of claims 1 to 8,
wherein the tan(delta) is tuned to have a maximum of approximately 2.0 or preferably 1.7 when the oscillation torque is less than 13000 microN·m.

10. Chewing gum according to any of claims 1 to 9,
wherein the chewing gum comprises an amount of fat of 0 to 15 % w/w.

11. Chewing gum according to any of claims 1 to 10,
wherein the chewing gum comprises an amount of wax of 0 to 15 % w/w.

12. Chewing gum according to any of claims 1 to 11,
wherein said plasticizers comprise liquid flavor.

13. Chewing gum according to any of claims 1 to 12,
wherein the chewing gum comprises an amount of flavor of 0 to 30 % w/w.

14. Chewing gum according to any of claims 1 to 13,
wherein the chewing gum comprises an amount of liquid sweeteners of 0 to 30 % w/w.

15. Chewing gum according to any of claims 1 to 14,
wherein the amount of plasticizers in the chewing gum is at least 10% w/w.

16. Chewing gum according to any of claims 1 to 15,
wherein the amount of plasticizers in the chewing gum is at least 15% w/w.

17. Chewing gum according to any of claims 1 to 16,
wherein the amount of plasticizers in the chewing gum is at least 20% w/w.

18. Chewing gum according to any of claims 1 to 17,
wherein the amount of plasticizers in the chewing gum is at least 30% w/w.

19. Chewing gum according to any of claims 1 to 18,
wherein the chewing gum partly comprises non-biodegradable polymers.

20. Chewing gum according to any of claims 1 to 18,
wherein the chewing gum polymers consist of biodegradable polymers.

21. Chewing gum according to any of claims 1 to 20,
wherein the linear viscoelastic region (LVR) has a maximum oscillation torque within a range of 300 microN·m to 10000 microN·m.

22. Chewing gum according to any of claims 1 to 21,
wherein the linear viscoelastic region (LVR) has a maximum within a range of 400 microN·m to 3000 microN·m.

23. Chewing gum according to any of claims 1 to 22,
wherein the linear viscoelastic region (LVR) has a maximum within a range of 500 microN·m to 2000 microN·m.

24. Chewing gum according to any of claims 1 to 23, wherein the tan(delta) (crit) is greater 1.0 where the tan(delta)(crit) is the tan(delta) value corresponding to delta(crit) in a tan(delta) vs. oscillation torque measurement and where delta (crit) represents the critical oscillation torque determined in a G' vs. oscillation torque measurement, which describes the oscillation torque at the point where the material begins to deform , i.e. the point where the oscillation torque invokes a transition from the LVR to the non-LVR.

25. Chewing gum according to any of claims 1 to 23,
wherein the tan(delta)(crit) is less than 1.0, preferably greater than 0.9, preferably greater than 0.8.

26. Chewing gum according to any of claims 1 to 25,
wherein the at least one biodegradable polymer comprises poly(ester-carbonate) the poly(ester-carbonate) comprising monomers selected from the group consisting of lactide, glycolide, ε-caprolactone, δ-valerolactone, β-propiolactone, dioxanone (ester-ether), tri-methylene carbonate, ethylene carbonate, propylene carbonate, 5,5 di-methyl-1,3-dioxane-2-one and 5-methyl-1,3-dioxane-2-one.

27. Chewing gum according to any of claims 1 to 26,
wherein the molecular weight of the at least one degradable polymer is in the range of 500 -10,000 g/mol.

28. Chewing gum according to any of claims 1 to 26,
wherein the molecular weight of the at least one degradable polymer is in the range of 10,000 -100,000 g/mol.

29. Chewing gum according to any of claims 1 to 26,
wherein the molecular weight of the at least one degradable polymer is in the range of 100,000 -1,000,000 g/mol.

## Patentansprüche

1. Kaugummi, umfassend Gummigrundlage, Süßungsmittel und Geschmackoder Aromastoff, wobei mindestens ein Teil der Gummigrundlage mindestens ein biologisch abbaubares Polymer umfasst,
wobei die Menge von Weichmachern in dem Kaugummi mindestens 5% (Gew./Gew.) beträgt,
wobei die Weichmacher aus der Gruppe bestehend aus Emulgatoren, Fett, Wachs, Geschmack- oder Aromastoff, Lösungsvermittlern, grenzflächenaktiven Mitteln und flüssigen Süßungsmitteln ausgewählt sind,
wobei der Kaugummi eine Menge von Emulgatoren von weniger als 5% (Gew./Gew.) umfasst und wobei
tan(delta) mindestens 0,6 innerhalb des linear viskoelastischen Bereichs (LVR; 'linear viscoelastic region') des Kaugummis beträgt und
der tan(delta) definiert ist als (Verlustmodul G"/Speichermodul G'),
wobei der tan(delta) bei 37°C und bei einer Oszillationsfrequenz von 1,0 Hz gemessen wird,
wobei tan(delta)(crit) größer als 0,8 ist,
wobei der tan(delta)(crit) der tan(delta)-Wert ist, welcher delta(crit) in einer Messung von tan(delta) gegenüber dem Oszillationsdrehmoment entspricht, und wobei das delta(crit) für das in einer Messung von G' gegenüber dem Oszillationsdrehmoment bestimmte kritische Oszillationsdrehmoment, wo das Oszillationsdrehmoment einen Übergang von dem LVR zu dem nicht-LVR induziert, steht.

2. Kaugummi nach Anspruch 1, wobei der tan(delta) außerhalb des linear viskoelastischen Bereichs (LVR) zunimmt.

3. Kaugummi nach Anspruch 1 oder 2, wobei der tan(delta) mittels mindestens eines Weichmachers eingestellt wird.

4. Kaugummi nach einem der Ansprüche 1 bis 3, wobei der tan(delta) außerhalb des linear viskoelastischen Bereichs (LVR) erhöht wird, indem Weichmacher zu dem Kaugummi hinzugesetzt wird.

5. Kaugummi nach einem der Ansprüche 1 bis 4, wobei die Steigung des tan(delta) außerhalb des linear viskoelastischen Bereichs (nicht-LVR) bezogen auf das Oszillationsdrehmoment erhöht wird, indem weiterer Weichmacher zu dem Kaugummi hinzugegeben wird.

6. Kaugummi nach einem der Ansprüche 1 bis 5, wobei der tan(delta) auf mindestens 1,0 in dem nicht-linear viskoelastischen Bereich (nicht-LVR) zunimmt.

7. Kaugummi nach einem der Ansprüche 1 bis 6, wobei der tan(delta) auf mindestens 1,0 in dem nicht-linear viskoelastischen Bereich (nicht -LVR) zunimmt, wenn ein Oszillationsdrehmoment von 10000 mikroN·m erreicht worden ist.

8. Kaugummi nach einem der Ansprüche 1 bis 7, wobei der tan(delta) auf mindestens 1 innerhalb von einer Dekade von dem Übergang zwischen dem linear viskoelastischen Bereich in den nicht-linear viskoelastischen Bereich hinein zunimmt, wenn der tan(delta) als eine Funktion des Oszillationsdrehmoments gemessen wird.

9. Kaugummi nach einem der Ansprüche 1 bis 8, wobei der tan(delta) angepasst wird, so dass er ein Maximum von in etwa 2,0 oder vorzugsweise 1,7 aufweist, wenn das Oszillationsdrehmoment weniger als 13000 mikroN·m beträgt.

10. Kaugummi nach einem der Ansprüche 1 bis 9, wobei der Kaugummi eine Menge von Fett von 0 bis 15% (Gew./Gew.) umfasst.

11. Kaugummi nach einem der Ansprüche 1 bis 10, wobei der Kaugummi eine Menge von Wachs von 0 bis 15% (Gew./Gew.) umfasst.

12. Kaugummi nach einem der Ansprüche 1 bis 11, wobei die Weichmacher flüssigen Geschmack- oder Aromastoff umfassen.

13. Kaugummi nach einem der Ansprüche 1 bis 12, wobei der Kaugummi eine Menge von Geschmack- oder Aromastoff von 0 bis 30% (Gew./Gew.) umfasst.

14. Kaugummi nach einem der Ansprüche 1 bis 13, wobei der Kaugummi eine Menge von flüssigen Süßungsmitteln von 0 bis 30% (Gew./Gew.) umfasst.

15. Kaugummi nach einem der Ansprüche 1 bis 14, wobei die Menge von Weichmachern in dem Kaugummi mindestens 10% (Gew./Gew.) beträgt.

16. Kaugummi nach einem der Ansprüche 1 bis 15, wobei die Menge von Weichmachern in dem Kaugummi mindestens 15% (Gew./Gew.) beträgt.

17. Kaugummi nach einem der Ansprüche 1 bis 16, wobei die Menge von Weichmachern in dem Kaugummi mindestens 20% (Gew./Gew.) beträgt.

18. Kaugummi nach einem der Ansprüche 1 bis 17, wobei die Menge von Weichmachern in dem Kaugummi mindestens 30% (Gew./Gew.) beträgt.

19. Kaugummi nach einem der Ansprüche 1 bis 18, wobei der Kaugummi zum Teil nicht biologisch abbaubare Polymere umfasst.

20. Kaugummi nach einem der Ansprüche 1 bis 18, wobei die Kaugummi-Polymere aus biologisch abbaubaren Polymeren bestehen.

21. Kaugummi nach einem der Ansprüche 1 bis 20, wobei der linear viskoelastische Bereich (LVR) ein maximales Oszillationsdrehmoment innerhalb eines Bereichs von 300 mikroN·m bis 10000 mikroN·m aufweist.

22. Kaugummi nach einem der Ansprüche 1 bis 21, wobei der linear viskoelastische Bereich (LVR) ein Maximum innerhalb eines Bereichs von 400 mikroN·m bis 3000 mikroN·m aufweist.

23. Kaugummi nach einem der Ansprüche 1 bis 22, wobei der linear viskoelastische Bereich (LVR) ein Maximum innerhalb eines Bereichs von 500 mikroN·m bis 2000 mikroN·m aufweist.

24. Kaugummi nach einem der Ansprüche 1 bis 23, wobei der tan(delta)(crit) größer als 1,0 ist, wobei der tan(delta)(crit) der tan(delta)-Wert ist, welcher delta(crit) in einer Messung von tan(delta) gegenüber dem Oszillationsdrehmoment entspricht und wobei delta(crit) für das kritische Oszillationsdrehmoment, welches in einer Messung von G' gegenüber dem Oszillationsdrehmoment bestimmt wird, welches das Oszillationsdrehmoment an dem Punkt, wo das Material sich zu verformen beginnt, d.h. dem Punkt, wo das Oszillationsdrehmoment einen Übergang von dem LVR zu dem nicht-LVR induziert, beschreibt, steht.

25. Kaugummi nach einem der Ansprüche 1 bis 23, wobei der tan(delta)(krit) geringer als 1,0, vorzugsweise größer als 0,9, vorzugsweise größer als 0,8 ist.

26. Kaugummi nach einem der Ansprüche 1 bis 25, wobei das mindestens eine biologisch abbaubare Polymer Poly(estercarbonat) umfasst, wobei das Poly(estercarbonat) Monomere ausgewählt aus der Gruppe bestehend aus Lactid, Glycolid, ε-Caprolacton, δ-Valerolacton, β-Propiolacton, Dioxanon(esterether), Trimethylencarbonat, Ethylencarbonat, Propylencarbonat, 5,5-Dimethyl-1,3-dioxan-2-on und 5-Methyl-1,3-dioxan-2-on umfasst.

27. Kaugummi nach einem der Ansprüche 1 bis 26, wobei die relative Molekülmasse des mindestens einen abbaubaren Polymers im Bereich von 500 - 10.000 g/mol liegt.

28. Kaugummi nach einem der Ansprüche 1 bis 26, wobei die relative Molekülmasse des mindestens einen abbaubaren Polymers im Bereich von 10.000 - 100.000 g/mol liegt.

29. Kaugummi nach einem der Ansprüche 1 bis 26, wobei die relative Molekülmasse des mindestens einen abbaubaren Polymers im Bereich von 100.000
- 1.000.000 g/mol liegt.

## Revendications

1. Chewing-gum comprenant une base de gomme, un édulcorant et un arôme, dans lequel au moins une partie de ladite base de gomme comprend au moins un polymère biodégradable,
dans lequel la quantité de plastifiants dans le chewing-gum est au moins 5 % poids/poids,
dans lequel lesdits plastifiants sont sélectionnés dans le groupe constitué d'émulsifiants, de graisses, de cire, d'arôme, de solubilisants, de tensioactifs et d'édulcorants liquides,
dans lequel ledit chewing-gum comprend une quantité d'émulsifiants inférieure à 5 % poids/poids, et où
la tangente (delta) est d'au moins 0,6 à l'intérieur de la région viscoélastique linéaire (LVR) du chewing-gum et
la tangente (delta) est définie comme (module de pertes G"/module de conservation G'),
dans lequel la tangente (delta) est mesurée à 37°C et à une fréquence d'oscillation de 1,0 Hz,
dans lequel la tangente (delta) (crit) est supérieure à 0,8,
dans lequel la tangente (delta) (crit) est la valeur de tangente (delta) correspondant à (delta) (crit) dans une mesure de tangente (delta) vs couple d'oscillation et où la delta (crit) représente le couple d'oscillation critique déterminé dans une mesure G' vs couple d'oscillation où le couple d'oscillation appelle une transition de LVR à non LVR.

2. Chewing-gum selon la revendication 1,
dans lequel la tangente (delta) augmente en dehors de la région viscoélastique linéaire (LVR).

3. Chewing-gum selon la revendication 1 ou 2,
dans lequel la tangente (delta) est réglée au moyen d'au moins un plastifiant.

4. Chewing-gum selon l'une quelconque des revendications 1 à 3,
dans lequel la tangente (delta) est augmentée en dehors de la région viscoélastique linéaire (LVR) par addition de plastifiant au chewing-gum.

5. Chewing-gum selon l'une quelconque des revendications 1 à 4,
dans lequel la pente de la tangente (delta) en dehors de la région viscoélastique linéaire (non LVR) par rapport au couple d'oscillation est augmentée par addition de plastifiant supplémentaire au chewing-gum.

6. Chewing-gum selon l'une quelconque des revendications 1 à 5,
dans lequel la tangente (delta) augmente à au moins 1,0 dans la région viscoélastique non linéaire (non LVR).

7. Chewing-gum selon l'une quelconque des revendications 1 à 6,
dans lequel la tangente (delta) augmente à au moins 1,0 dans la région viscoélastique non linéaire (non LVR) quand un couple d'oscillation de 10 000 microN·m est atteint.

8. Chewing-gum selon l'une quelconque des revendications 1 à 7,
dans lequel la tangente (delta) augmente à au moins 1 à l'intérieur d'une décade à partir de la transition entre la région viscoélastique linéaire dans la région viscoélastique non linéaire, quand la tangente (delta) est mesurée comme une fonction de couple d'oscillation.

9. Chewing-gum selon l'une quelconque des revendications 1 à 8,
dans lequel la tangente (delta) est réglée pour avoir un maximum d'environ 2,0 ou de préférence de 1,7 quand le couple d'oscillation est inférieur à 13 000 microN.m.

10. Chewing-gum selon l'une quelconque des revendications 1 à 9,
dans lequel le chewing-gum comprend une quantité de graisse de 0 à 15 % poids/poids.

11. Chewing-gum selon l'une quelconque des revendications 1 à 10,
dans lequel le chewing-gum comprend une quantité de cire de 0 à 15 % poids/poids.

12. Chewing-gum selon l'une quelconque des revendications 1 à 11,
dans lequel lesdits plastifiants comprennent de l'arôme liquide.

13. Chewing-gum selon l'une quelconque des revendications 1 à 12,
dans lequel le chewing-gum comprend une quantité d'arôme de 0 à 30 % poids/poids.

14. Chewing-gum selon l'une quelconque des revendications 1 à 13,
dans lequel le chewing-gum comprend une quantité d'édulcorants liquides de 0 à 30 % poids/poids.

15. Chewing-gum selon l'une quelconque des revendications 1 à 14,
dans lequel la quantité de plastifiants dans le chewing-gum est d'au moins 10 % poids/poids.

16. Chewing-gum selon l'une quelconque des revendications 1 à 15,
dans lequel la quantité de plastifiants dans le chewing-gum est d'au moins 15 % poids/poids.

17. Chewing-gum selon l'une quelconque des revendications 1 à 16,
dans lequel la quantité de plastifiants dans le chewing-gum est d'au moins 20 % poids/poids.

18. Chewing-gum selon l'une quelconque des revendications 1 à 17,
dans lequel la quantité de plastifiants dans le chewing-gum est d'au moins 30 % poids/poids.

19. Chewing-gum selon l'une quelconque des revendications 1 à 18,
dans lequel le chewing-gum comprend en partie des polymères non biodégradables.

20. Chewing-gum selon l'une quelconque des revendications 1 à 18,
dans lequel les polymères de chewing-gum sont composés de polymères biodégradables.

21. Chewing-gum selon l'une quelconque des revendications 1 à 20,
dans lequel la région viscoélastique linéaire (LVR) a un couple d'oscillation maximum dans la plage de 300 microN·m à 10 000 microN·m.

22. Chewing-gum selon l'une quelconque des revendications 1 à 21,
dans lequel la région viscoélastique linéaire (LVR) a un maximum dans une plage de 400 microN·m à 3 000 microN.m.

23. Chewing-gum selon l'une quelconque des revendications 1 à 22,
dans lequel la région viscoélastique linéaire (LVR) a un maximum dans une plage de 500 microN·m à 2 000 microN·m.

24. Chewing-gum selon l'une quelconque des revendications 1 à 23, dans lequel la tangente (delta) (crit) est supérieure à 1,0, où la tangente (delta) (crit) est la valeur de tangente (delta) correspondant à delta (crit) dans une mesure de tangente (delta) vs couple d'oscillation et où delta (crit) représente le couple d'oscillation critique déterminé par une mesure G' vs couple d'oscillation, qui décrit le couple d'oscillation au point où le matériau commence à se déformer, c'est-à-dire au point où le couple d'oscillation appelle une transition de LVR à non LVR.

25. Chewing-gum selon l'une quelconque des revendications 1 à 23, dans lequel la tangente (delta) (crit) est inférieure à 1,0, de préférence supérieure à 0,9, de préférence supérieure à 0,8.

26. Chewing-gum selon l'une quelconque des revendications 1 à 25,
dans lequel le au moins un polymère biodégradable comprend du poly(ester-carbonate), le poly(ester-carbonate) comprenant des monomères sélectionnés parmi le groupe constitué de lactide, glycolide, ε-caprolactone, δ-valérolactone, β-propiolactone, dioxanone, (ester-éther), carbonate de triméthylène, carbonate d'éthylène, carbonate de propylène, 5,5 diméthyl-1,3-dioxane-2-one et 5-méthyl-1,3-dioxane-2-one.

27. Chewing-gum selon l'une quelconque des revendications 1 à 26,
dans lequel le poids moléculaire du au moins un polymère dégradable est dans la plage de 500 - 10 000 g/mol.

28. Chewing-gum selon l'une quelconque des revendications 1 à 26,
dans lequel le poids moléculaire du au moins un polymère dégradable est dans la plage de 10 000-100 000 g/mol.

29. Chewing-gum selon l'une quelconque des revendications 1 à 26,
dans lequel le poids moléculaire du au moins un polymère dégradable est dans la plage de 100 000-1 000 000 g/mol.
